(19) Europäisches Patentamt

European Patent Office

Office européen des brevets

(11) **EP 0 434 881 B1**

(12) **EUROPEAN PATENT SPECIFICATION**

(45) Date of publication and mention
of the grant of the patent:
**05.03.1997 Bulletin 1997/10**

(51) Int Cl.6: **G06F 15/02**, G09B 19/02

(21) Application number: **89403664.9**

(22) Date of filing: **27.12.1989**

(54) **Calculator for assisting the teaching of mathematics in elementary classes**

Rechner für Mathermatiklehrhilfe in Grundschulen

Calculatrice d'aide à l'enseignement des mathématiques dans des classes élémentaires

(84) Designated Contracting States:
**DE FR GB IT NL**

(43) Date of publication of application:
**03.07.1991 Bulletin 1991/27**

(73) Proprietors:
- **TEXAS INSTRUMENTS FRANCE Société dite:**
  **06270 Villeneuve Loubet (FR)**
  Designated Contracting States:
  **FR**
- **TEXAS INSTRUMENTS INCORPORATED**
  **Dallas Texas 75265 (US)**
  Designated Contracting States:
  **DE GB IT NL**

(72) Inventor: **Colombat Hubert**
**F-06140 Vence (FR)**

(74) Representative: **Obolensky, Michel et al**
**c/o CABINET LAVOIX**
**2, place d'Estienne d'Orves**
**75441 Paris Cédex 09 (FR)**

(56) References cited:
**US-A- 4 340 375**        **US-A- 4 447 213**

- **HEWLETT-PACKARD JOURNAL, vol. 31, no. 3, March 1980, pp. 3-11, Palo Alto, US; B.E. MUSCH et al.: "Powerful personal calculator system sets new standards"**

## Description

The present invention relates to calculators and relates more particularly to calculators intended to be used by schoolchildren attending primary schools.

An increasing need is being felt for having a tool which makes the teaching of mathematics easier at primary school level by familiarizing the children with "problem solving" situations involving the use of numbers, with simplification of the understanding of mathematical language by means of concrete examples, giving pupils greater independence in mathematics and preparing the pupils for the mathematical concepts which they will have to deal with during their secondary studies.

It is known from US-A-4,447,213 an electronic learing aid of the type including a calculator comprising a microprocessor controlling the operations performed by the calculator, a plurality of shift registers associated with the microprocessor and intended for the temporary storage of the numbers on which the operations must be performed, a read only memory containing the programs relating to the functions of the calculator, a display controller associated with the microprocessor and the read only memory, a keyboard for controlling the operations and entering data into the calculator, and a display screen having a plurality of digit fields, and a complex sign formed from segments enabling the display disposed in at least one interval between two of the consecutive digit fields of said display screen, said complex sign under the control of the display controller and the microprocessor, providing a symbolic sign of the corresponding operation.

The purpose of the invention is therefore to create a calculator which, while being of relatively simple construction, makes further contribution to the teaching of mathematics in elementary classes.

Its subject is therefore a calculator comprising a microprocessor controlling the operations performed by the calculator, a plurality of shift registers associated with the microprocessor and intended for the temporary storage of the numbers on which the operations must be performed, a read only memory containing the programs relating to the functions of the calculator, a display controller associated with the microprocessor and the read only memory, a keyboard for controlling the operations and entering data into the calculator, and a display screen having a plurality of digit fields, and a complex sign formed from segments enabling the display disposed in at least one interval between two of the consecutive digit fields of said display screen, said complex sign under the control of the display controller and the microprocessor, providing a symbolic sign of the corresponding operation, characterized in that the display screen contains a plurality of digit fields of up to eight in number and includes a complex sign disposed in each of the intervals separating the digit fields for a plurality of digit fields of at least three in number starting from the left and in that the display screen includes a point associated with each of the plurality of digit fields, each respective point being disposed below the digit field corresponding thereto in alignment with the left-most segments of the digit provided in the digit field, said point cooperating with the appropriate segments of the digit included in the corresponding digit field to form a question mark illustrating the display of an unknown on said display screen under the control of the microprocessor and of the display controller.

The invention will be better understood with the help of the following description, given solely by way of example and with reference to the appended drawings in which :

- Figure 1 is a simplified block diagram of a calculator according to the invention;
- Figure 2 is a detailed view of the keyboard of the calculator of Figure 1;
- Figure 3 shows the successive states of the display screen of the calculator according to the invention during the execution of a calculation formed from two successive operations;
- Figure 4 is a diagram of another embodiment of the screen of the calculator according to the invention;
- Figure 5 shows the successive states of the display screen of Figure 4 of the calculator according to the invention during an operation on non-integer numbers;
- Figure 6 shows the successive states of the display screen of Figure 4 of the calculator according to the invention during the execution of an operation with an unknown value;
- Figure 7 shows the successive states of the display screen of Figure 4 of the calculator according to the invention while seeking solutions to an expression involving an unknown operation;
- Figure 8 shows the successive states of the display screen of the calculator according to the invention while seeking solutions to an inequality involving an unknown value;
- Figure 9 shows the successive states of the display screen of Figure 4 of the calculator during an operation of determination of the position of digits belonging to an integer number; and
- Figure 10 shows the successive states of the display screen of Figure 4 of the calculator during an operation of determination of the position of digits belonging to a non-integer number.

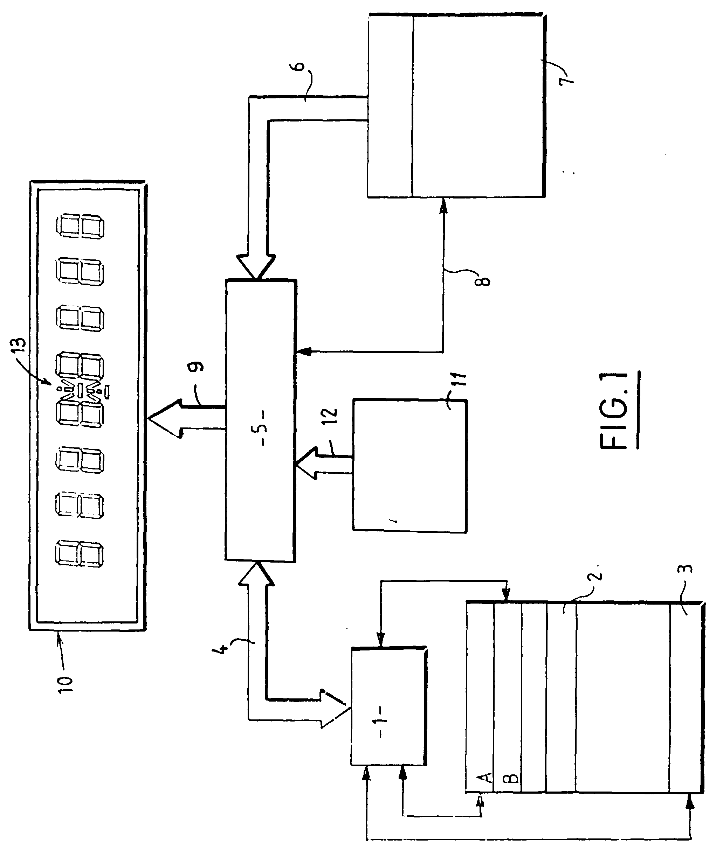

The calculator whose block diagram is shown in Figure 1 comprises a microprocessor 1, associated with a stack of shift registers 2 intended for temporarily storing the numbers on which an operation must be performed and a random access memory 3 intended for storing the data relating to an operation in progress.

The microprocessor 1 communicates by means of a bus 4 with a display controller 5 which is connected in its turn by a data and address bus 6 to a read only memory 7 containing the programming data of the various functions which the calculator can perform.

The display controller 5 is also connected to the read only memory 7 by a control conductor 8.

The display controller 5 is connected by a bus 9 to a display screen 10 displaying numbers, operations on these numbers and the results of these operations.

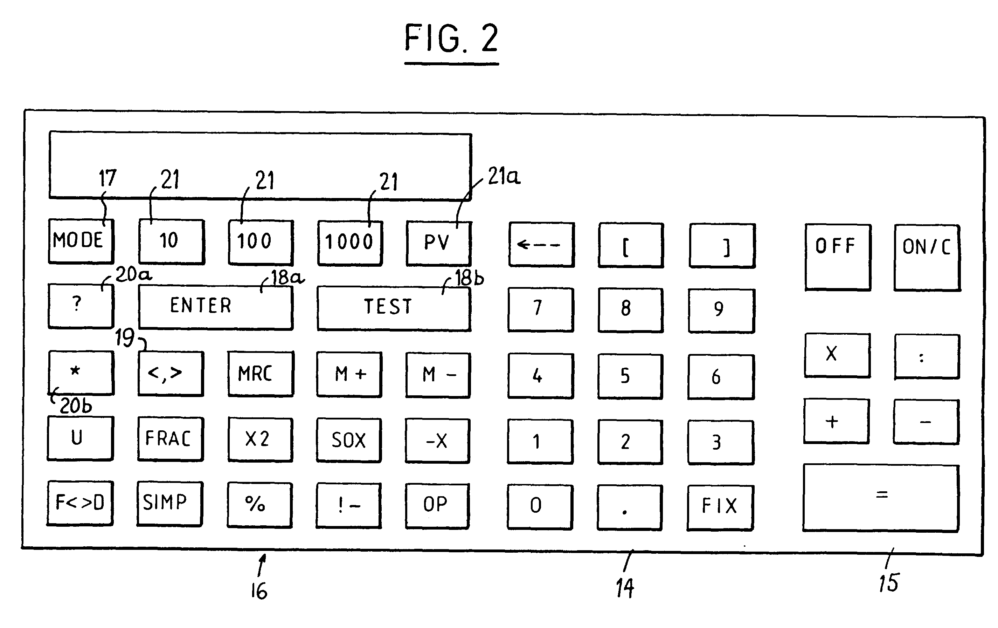

Finally, the calculator comprises a keyboard 11 connected by a bus 12 to the display controller 5. This keyboard will be described in detail with reference to Figure 2.

In the embodiment shown in Figure 1, the display screen is an eight-digit screen, each digit being formed from seven segments.

In the interval separating the fourth and fifth digits there is disposed, according to the invention, a composite sign 13 formed from eight segments and two points.

This sign is intended for displaying a sign defining an operation performed by the calculator under the control of its keyboard 11.

The composite sign 13 enables the display of the operations +, -, x, ÷, ⊢, =, <, > and *, the sign ⊢ representing Euclidean division which the calculator is possibly capable of performing and the asterisk * representing a query on the nature of an operation to be performed.

The complex sign 13 is formed from a first horizontal segment intended to represent the subtraction sign -, two vertical segments disposed on either side of the horizontal segment and intended to represent with the latter the addition sign +, four inclined segments, respectively placed in the quadrants defined by the horizontal segment and the vertical segments, the four inclined segments being intended to represent the multiplication sign x, two points respectively disposed above and below the vertical segments and intended to form with the horizontal segment the division sign ÷ and a second horizontal segment disposed parallel to the first horizontal segment and intended to represent with the latter the equals sign =.

The simultaneous excitation of the segments of the complex sign 13 for representing the subtraction, addition and multiplication signs enables the display of an asterisk representing an unknown operation.

The selective excitation of two of the inclined segments for representing the multiplication sign enables the display of one of the inequality signs < or >.

The keyboard 11 shown in Figure 2 comprises, in its right-hand section, a zone 14 of ordinary numerical keys and a zone 15 of mathematical operations control keys already existing in conventional calculators.

In its left-hand section, the keyboard 11 furthermore comprises a zone 16 comprising keys for controlling particular operations which the calculator according to the invention is capable of performing.

Among these keys there is, according to the invention, a "MODE" key 17, an "ENTER" key 18a, a "TEST" key 18b, a key 19 for entering the sign < by one pressing and the sign > by two successive pressings of this same key, a "?" key 20a for entering an unknown value, a "*" key 20b for entering an unknown operation, "10", "100" and "1000" keys 21 for determining the number of tens, hundreds and thousands in a number, and a key 21a for determining the positional value of a digit in a previously displayed number.

The "MODE" key 17 is intended to set the calculator into a special articular functional mode different from that of a calculator.

The "ENTER" key 18a is intended to control the entry of a mathematical expression when in this special mode.

The user must operate this key after having formed, with the help of the other keys of the keyboard 11, the mathematical expression which he wishes to enter in the calculator.

As soon as the key 18a is pressed, the calculator validates the content of the proposed mathematical expression and indicates to the user if the corresponding expression:

- is correct or incorrect, if it contains no unknowns, whether it is a value or an operation;
- has no solution or one or more solutions or even an infinity of solutions when the "input" expression includes an unknown (value or operation) or two unknown values.

The "TEST" key 18b enables the user to suggest either a value appearing on the display in the form of a "?" when the unknown is a number, or an operation appearing in the form of a "*" if the unknown is an operation.

The sequence for obtaining the answer from the calculator consists in successively operating the key of the value or of the proposed operation and the "TEST" key 18b as many times as there are unknowns.

The "?" key 20a is, as already mentioned, intended for identifying an unknown value in an expression.

The calculator described with reference to Figures 1 and 2 enables any operation to be performed by successively " writing ", by means of the display screen, all the terms of an operation.

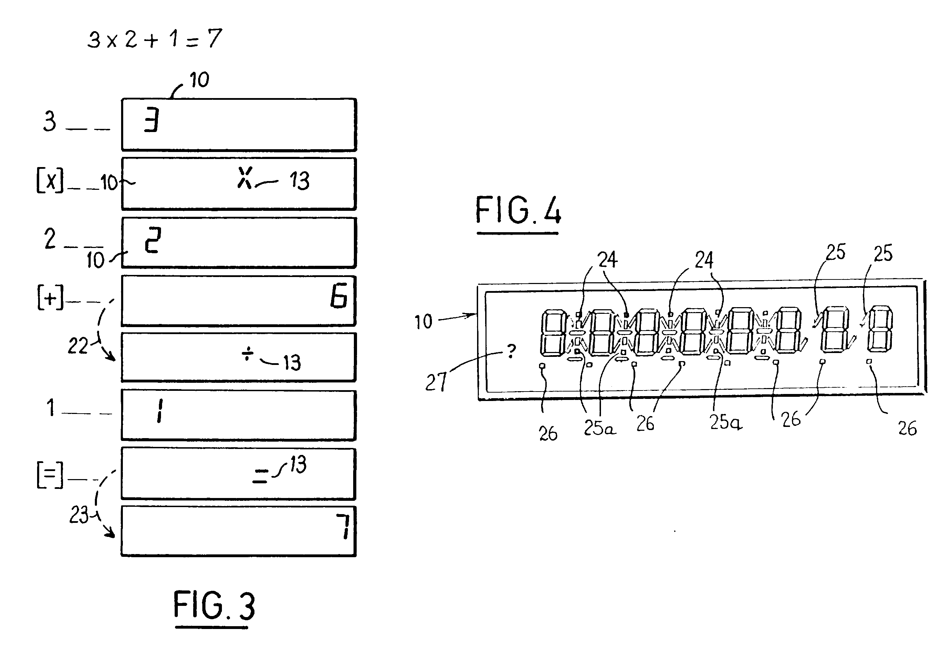

An example of the progression of an operation is shown in Figure 3.

It is a matter of performing the operation:

$$3 \times 2 + 1 = 7$$

Having switched the calculator on, the numerical key 3 is pressed first.

The corresponding figure 3 appears at the left on the screen 10, i.e. at the location corresponding to that in which a pupil writes the first number of an operation.

Then the key [X] is pressed.

The sign [X] appears on the screen 10 by means of the illumination of the appropriate segments of the composite sign 13.

The appearance of the sign X occurs in the centre of the screen, i.e., to the right of the first number.

Operating the [X] key simultaneously causes the disappearance of the figure 3.

Then, the numerical key 2 is pressed, which causes, on the display screen 10, the disappearance of the X sign and the appearance, on the left-hand side, of the figure 2.

The next operation consists in pressing the [+] key, which operation causes the appearance at the right of the screen 10 of the intermediate result "6" according to algebraic priority rules.

This appearance is momentary and lasts for approximately one second. It is illustrated by the arrow 22 in broken lines which indicates the transition from the display of the intermediate result to the next phase of displaying the + sign.

This + sign is also obtained by an illumination of the appropriate segments of the composite sign 13.

Then, the numerical key 1 is pressed, which causes the appearance of this figure at the left of the screen.

The complete operation to be performed having been entered, the = key is pressed.

The = sign obtained by the illumination of the appropriate segments of the sign 13 appears in the centre of the screen for one second as indicated by the arrow in broken lines 23, and then the final result, namely 7, appears at the right of the screen.

It can therefore be seen that by means of the arrangement of the invention, an operation performed by a pupil on the calculator progresses in its entirety on the screen in front of the operator's eyes, which enables the operator to check the correct entry of data step by step.

Everything happens as though the pupil were himself writing the operation to be performed by hand.

The calculator displays the intermediate calculating results for a small time period (for example one second), if an operation initiates the calculation of a previous operation according to algebraic priority rules.

The screen of the calculator shown in Figure 4 includes, between the first six digits starting from the left-hand side, signs 24 similar to the sign 13 of the calculator shown in Figure 1. Between the last three digits, at the right of the screen, are provided signs 25 each representing an oblique stroke.

Oblique strokes / and points enabling the representation of decimal points can of course be obtained from complex signs 24 by an appropriate excitation of the corresponding segments of the latter.

The decimal points are represented by the illumination of the lower points 25a, used normally for displaying the division sign.

Below each of the eight digits of the display screen 10 and in alignment with the left-hand segments of each digit there is disposed a point 26 intended to be combined with certain segments of the digit with which it is associated in order to display a question mark "?" representing an unknown value in an operation to be performed.

At the left of the display screen 10, a zone 27 enables the appearance of a small question mark indicating that the calculator has been switched into a special mode, different from the normal functioning of a calculator.

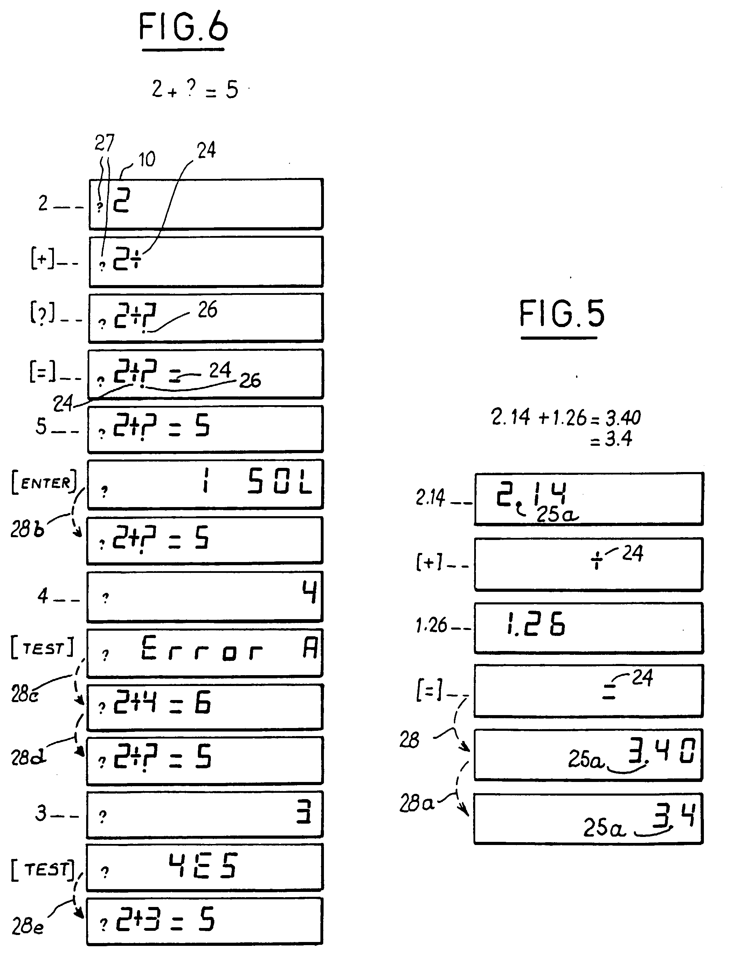

Such a configuration of the screen 10 and of its display elements enables the carrying out of operations such as, for example, that which will now be described with reference to Figure 5.

This is a matter of demonstrating to the pupils in primary classes that the result of the operation:

2.14 + 1.26 = 3.40 can also be written in the form 3.4.

For this purpose, as shown in Figure 5, the keyboard 11 is first used to enter the number 2.14 which appears on the screen 10.

Then the [+] key is pressed and a "+" sign formed from a composite sign 24 appears in the centre of the screen 10.

Then, using the keyboard, the number 1.26 is displayed on the screen. The decimal points of these numbers are represented by the points 25a of the corresponding composite signs 24.

Then, the [=] key is pressed and the corresponding [=] sign formed by the appropriate segments of the composite sign 24 appears on the screen 10.

The = sign remains displayed on the screen for a relatively short time as indicated by the arrow 28, then it is replaced at the right of the screen by the result of the addition, namely 3.40.

This result which includes a zero after the 4 is also displayed for a short time, as indicated by the transition arrow 28a, and is finally replaced by the number 3.4.

This shows the user that a zero at the end of a number having digits after the decimal point can be dispensed with.

The calculator displays all of the zeroes to the right of the decimal point resulting from operations on the decimal parts of the numbers appearing in the calculated expression.

The example shown in Figure 6 illustrates the operating mode of the calculator using an unknown value.

It is a matter of solving the elementary equation

$$2 + ? = 5$$

For this purpose the procedure begins by going into the interrogation mode by pressing the "MODE" key 17 which makes the indicator 27 appear in the display.

In a first phase, the key 2 is pressed which causes the display of the figure 2 at the left of the screen 10.

Then the [+] key is operated. The [+] sign produced by means of the composite sign 24 located immediately to the right of the displayed figure 2 appears on the screen and remains displayed simultaneously with the figure 2.

Then the "?" key is pressed. A question mark formed by means of the appropriate segments of the digit located to the right of the + sign together with the associated point 26 appears on the screen.

Then the [=] key is pressed and the = sign formed by means of the composite sign 24 located to the right of the question mark appears on the screen 10, and then a result is entered, 5 for example.

Then the "ENTER" key is pressed, which validates the expression and which causes the appearance on the screen 10 of the indication "1 SOL" showing that the expression has one solution.

The indication "1 SOL" appears temporarily as represented by the arrow 28b in broken lines shown in Figure 6 and when it disappears the equation 2 + ? = 5 again appears on the screen 10.

In order to seek the solution of this equation, the figure 4 is tried.

The numerical key 4 is pressed, which causes the disappearance of the previously displayed equation and the appearance of the figure 4 at the right of the screen 10. Then the "TEST" key of the keyboard 11 is pressed in order to test the suggested value.

The indication "ERROR" appears on the screen for a short time as shown by the arrow 28c. It is then replaced by the equality 2 + 4 = 6 indicating the exact expression taking account of the suggested value and then, rapidly as shown by the arrow 28d, by the initial expression 2 + ? = 5.

This shows that the user has not found the correct figure and must start again.

If he then presses the numerical key 3 and then the "TEST" key, there will be a successive appearance of the figure 3, then the display "YES" indicating that this time the answer given is correct and finally, after a short time lapse indicated by the arrow 28e, there is a display of the complete equality 2 + 3 = 5 in which the sign "?" is replaced by the figure 3.

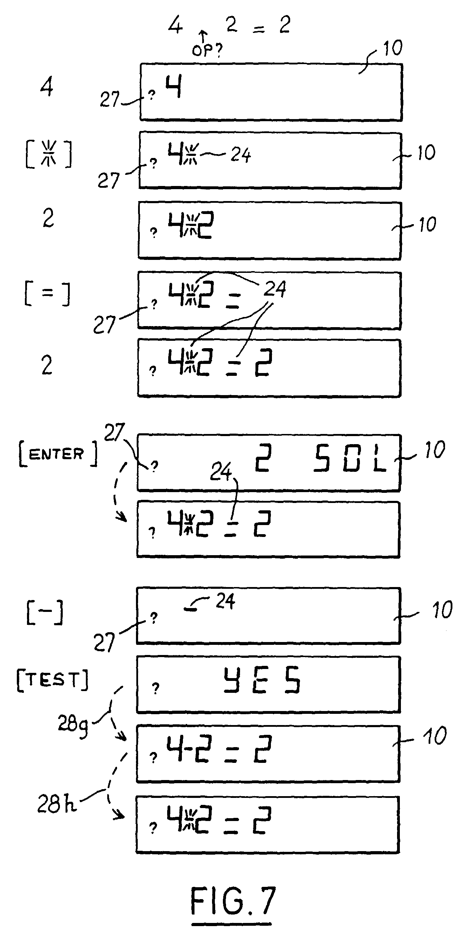

The example shown in Figure 7 illustrates the mode of functioning of the calculator using an unknown operation.

It is a matter of solving the equation:

$$4 \overset{\uparrow}{_{op?}} 2 = 2$$

where op? represents one or more unknown operations by means of which the expression can be verified.

In order to enable the calculator to execute the operations necessary for the solution of the abovementioned problem, the initial operation is to press the "MODE" key 17 (Figure 2) which makes the small question mark appear in the zone 27 of the display screen 10.

In an first phase, the numerical key 4 is then pressed, which causes the appearance of the figure 4 at the left of the screen 10.

Then, the [*] key 20b of the keyboard shown in figure 2 is pressed.

The * sign, produced by means of the composite sign 24 located immediately to the right of the figure 4, appears on the screen 10.

The subsequent operating of the numerical key 2 makes a 2 appear on the screen 10 to the right of the * sign.

Then the [=] key is pressed, which causes the appearance of the = sign formed by means of the composite sign 24 located to the right of the figure 2.

Then the requested result, namely 2, is made to appear on the display to the right of the = sign by again pressing the numerical key 2.

The proposed expression is validated by pressing the "ENTER" key 18a, the operation of which causes the appearance of the indication "2 SOL" for one second, this indication showing that there are two solutions to the proposed expression 4 * 2 = 2.

The arrow in broken lines 28f represents this momentary display.

Then the expression 4 * 2 = 2 reappears on the display screen 10.

It is assumed that in order to solve the proposed expression the user wishes to try subtraction.

He presses the [-] key, which causes the disappearance of the entire expression and the display of the - sign obtained by means of the composite sign 24 which is nearest the left-hand end of the screen 10.

Then the "TEST" key is pressed, which causes the display of the word "YES" indicating that subtraction actually verifies the proposed expression.

The arrow 28g in broken lines shows that the word "YES" remains displayed for one second. It is then replaced by the expression 4 - 2 = 2 according to the proposed solution which it also displays for only one second as shown by the arrow 28h.

Then, the initially entered expression 4 * 2 = 2 reappears on the screen 10.

The user can then seek, by a process similar to that which has been described, the second operation which verifies the expression 4 * 2 = 2, namely division.

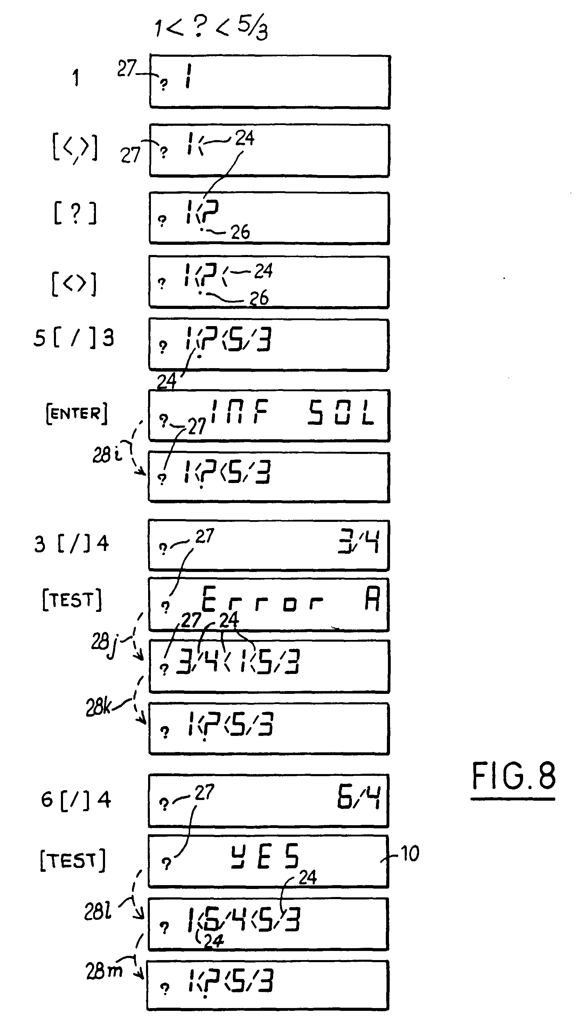

Another application of the calculator according to the invention shown in Figure 8 is the solving of inequalities.

In this case and by way of example, the solving of the following inequality will be described.

$$1 < ? < 5/3$$

To start the operations, the "MODE" key 17 is pressed, which causes the appearance of a small question mark in the zone 27 of the screen.

Then the display of the figure 1 is produced. Then the [ < > ] key 19 is operated by pressing it once.

The < sign is formed on the screen 10 using the composite sign 24 located to the right of the figure 1.

Then the unknown value key [?] 20a is pressed. A question mark formed from the segments of the digit located to the right of the 1 and the point 26 attached to each digit appears on the screen 10.

Then the [ < > ] key is operated again by pressing it once in order to cause the appearance of another < sign formed from the composite sign 24 located to the right of the ?.

Then the fraction 5/3 is formed by successively pressing the keys 5, [/] and 3.

Operating the validation key "ENTER" 18a causes the appearance for one second of the expression INF SOL indicating that there is an infinite number of solutions to the proposed expression.

The arrow 28i indicates the disappearance of this expression and its replacement by the proposed expression.

If the user proposes the number 3/4 as a solution by forming this number using the numerical keys and the appropriate sign keys and if he then presses the "TEST" key 18b, the word "ERROR" will appear on the screen 10 showing that the selected solution is wrong.

As shown by the arrow 28j, this word disappears after one second and is replaced by the inequality 3/4 < 1 < 5/3 which is the correct solution with the tried number.

Then, after one second, as shown by the arrow 28k, the inequality to be solved 1 < ? < 5/3 is displayed again.

The user then tries the number 6/4 by forming this number using the appropriate keys of the keyboard 11 of the calculator.

Then he operates the "TEST" key, which causes the appearance on the screen 10 of the word "YES" indicating that this time the proposed solution is a correct solution.

This word remains displayed for one second, as represented by the arrow 28l in broken lines and is then replaced by the confirmation of the proposed solution

$$1 < 6/4 < 5/3$$

After one second, as represented by the arrow 28m, there is again a display of the initially given expression, namely,

$$1 < ? < 5/3$$

which enables the user to seek other solutions.

Another original use of the calculator according to the invention consists in determining the positional value of each digit of a number or the number of thousands, hundreds, tens and units which form this number.

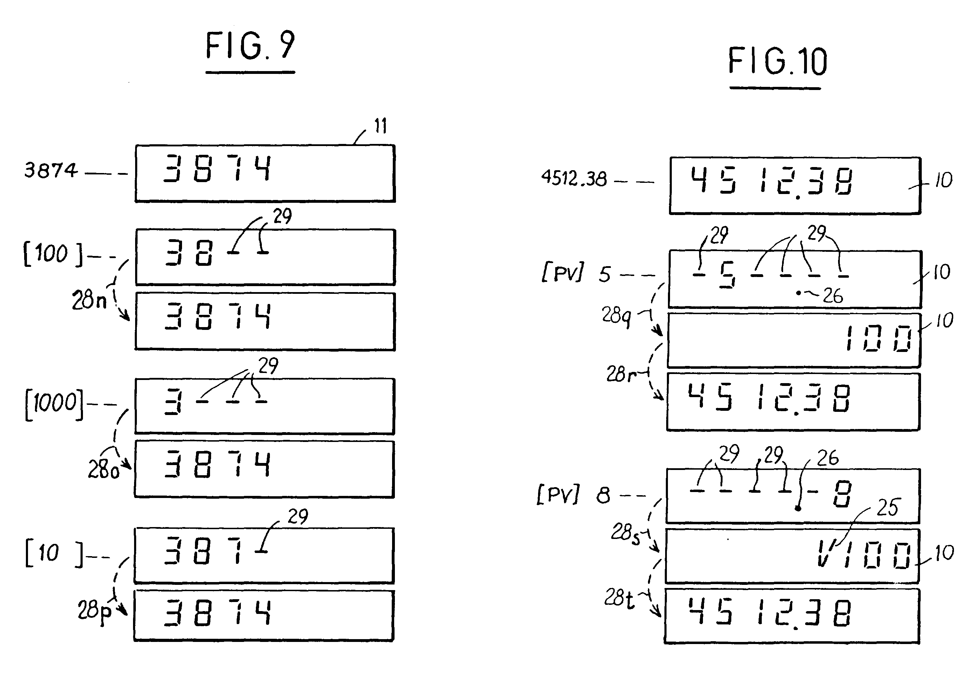

By way of example, as shown in Figure 9, there will be described the functioning of the calculator according to the invention during the analysis of the number 3874.

Firstly the number 3874 is displayed on the screen using the appropriate keys of the calculator's keyboard 11.

Then, one of the keys 21 of the keyboard 11 is pressed, for example the [100] key.

This operation causes, as shown by the arrow 28n, the momentary disappearance from the screen 10 of the figures 4 and 7 of the units and the tens. Only the number 38 remains on the screen, which indicates that the initially displayed number 3874 contains 38 hundreds.

The locations of the Figures 4 and 7 are each marked by the intermediate horizontal segment 29 of each of the momentarily eliminated Figures 4 and 7.

The right-hand digit of the remaining display, namely the 8 is in the hundreds position.

Then, after about one second, as shown by the arrow 28o, the number 3874 reappears in its entirety.

If the thousands [1000] key 21 is then pressed, the three figures 8, 7 and 4 disappear from the screen and are replaced by the intermediate horizontal segments 29 which mark the respective locations of the units, tens and hundreds.

Only the figure 3 remains displayed, which indicates that the initially displayed number 3874 contains 3 thousands or that the figure 3 is in the thousands position.

As shown by the arrow in broken lines 28o, only the figure 3 remains displayed for a short period of time and is then again replaced by the initially displayed number 3874.

Similarly, pressing the tens key 21 causes the momentary disappearance of the figure 4 and the indication of its location by a segment 29.

The number 387 which remains displayed for a short period as shown by the arrow 28p indicates that the number 3874 contains 387 tens or that the Figure 7 is in the tens position.

The example illustrated in Figure 10 enables the determination of the positional value of any digit in a given number whether it is an integer or a decimal number.

The analysis for example relates to the number 4512.38 which is initially displayed on the screen in the normal way.

Then, the positional value key "PV" is operated followed by the key corresponding to the digit for which knowledge of the positional value is desired, the numerical key 5 for example, which causes the momentary disappearance of all the digits of the number 4512.38 other than the 5, the locations of the removed digits being marked by the horizontal segments 29 while the location of the decimal point also remains displayed in the form of a point 25a. After about one second, the previous display disappears as indicated by the arrow 28q in broken lines and the number 100 momentarily appears on the screen 10.

This number indicates that the positional value of the figure 5 in the number 4512.38 is 100.

Then, as shown by the arrow 28r, the initially displayed number 4512.38 reappears on the screen.

In the same way it is possible to determine the positional value of the digits after the decimal point.

For example, if it is desired to know the positional value of the figure 8, the positional value key "PV" is pressed again and then the key 8 is pressed.

Following this, there is momentary disappearance of all of the digits in the number 4512.38 with the exception of the figure 8, the other digits being marked by the corresponding segments 29 and the location of the decimal point being marked by a point 25a as in the case of the determination of the position of the figure 5.

After about one second, as shown by the arrow 28s, the figure 8 disappears and the indication 1/100 appears on the screen 10, the oblique line being produced by two segments of a composite sign 25 appropriately illuminated.

This indication shows that the positional value of the figure 8 in the number 4512.38 is that of the hundredths.

Then, as shown by the arrow 28t, the indication 1/100 disappears and the number 4512.38 reappears for the purpose, for example, of determining the position of another digit figure in this number.

When a number comprises identical digits in different positions, in order to know the position of these digits it suffices, after having pressed the PV key 20, to repeat the operating of the corresponding numerical key as often as necessary. The positions of the identical digits will appear successively on the screen in order of increasing significance.

The various embodiments of the calculator according to the invention can of course be combined in one and the same calculator.

It suffices for such a calculator to provide a display screen which comprises, interposed between several of its digits, composite signs capable of providing the display of signs relating to the various operations that the calculator is capable of performing.

The various operations which have just been described are made possible by means of storage in the read only memory 7 of the corresponding programs and by calling up these programs by means of corresponding function keys included in the calculator's keyboard 11.

In the above description, there has been given by way of example a certain number of operations which the calculator according to the invention is capable of performing.

It is understood however that the possibilities of the calculator are not limited to the operations described with reference to the drawings.

It is possible for example, using the calculator, to check the solutions of an expression containing an operation op which can be a subtraction, addition, multiplication or division, and an unknown value ?.

This expression can be written in the following forms:

$$A \text{ op } B = ?$$

$$A \text{ op } ? = B$$

$$? \text{ op } A = B$$

It is also possible to determine the solutions of operations in which a two-digit number is given by one of its digits only.

Such expressions are written:

$$A \text{ op } B = C?$$

$$A \text{ op } B = ?C$$

$$A \text{ op } B? = C$$

$$A \text{ op } ?B = C$$

$$A? \text{ op } B = C$$

$$?A \text{ op } B = C$$

It is also possible to solve expressions such as:

$$? \text{ op } ? = A$$

$$A \times ? + ? = B$$

using either two unknown values and one operation, or two unknown values each associated with a known operation.

It is also possible to solve operations such as A op B op C = ?, using two operations and an unknown value.

The calculator also enables a solution to be found to an expression such as A op B op C = D? using two operations and an unknown digit of given positional value in a two-digit number.

The calculator also enables the verification of expressions containing percentages such as :

$$A\% = ?/B$$

$$\text{or } ?\% = A/B$$

It enables operations on fractions such as A/B = ?/C to be performed.

All of these operations are made possible due to the capabilities of the keyboard and the display screen of the calculator according to the invention, associated, of course, with appropriate programs stored in its read only memory.

## Claims

1. A calculator comprising:

a microprocessor (1) controlling the operations performed by the calculator, a plurality of shift registers (2) associated with the microprocessor and intended for the temporary storage of the numbers on which the operations must be performed, a read only memory (7) containing the programs relating to the functions of the calculator, a display controller (5) associated with the microprocessor (1) and the read only memory (7), a keyboard (11) for controlling the operations and entering data into the calculator, and a display screen (10) having a plurality of digit fields, and a complex sign (24) formed from segments enabling the display disposed in at least one interval between two of the consecutive digit fields of said display screen, said complex sign under the control of the display controller (5) and the microprocessor (1), providing a symbolic sign (+, -, x, ÷, ⊢, =, <, >, *) of the corresponding operation; characterized in that the display screen contains a plurality of digit fields of up to eight in number and includes a complex sign (24) disposed in each of the intervals separating the digit fields for a plurality of digit fields of at least three in number starting from the left and in that the display screen includes a point associated with each of the plurality of digit fields, each respective point (26) being disposed below the digit field corresponding thereto in alignment with the left-most segments of the digit provided in the digit field, said point cooperating with the appropriate segments of the digit included in the corresponding digit field to form a question mark illustrating the display of an unknown on said display screen under the control of the microprocessor (1) and of the display controller (5).

2. A calculator as set forth in c1aim 1, further characterized in that the display screen (10) includes a zone (27) disposed to the left of the extreme left digit field for displaying a question mark in response to the calculator being switched into a special functional mode different from the calculator functional mode.

3. A calculator as set forth in any of Claims 1 and 2, further characterized in that the display screen (10) includes segments providing a sign (25) representing an oblique stroke in the respective intervals between the three right-hand digit fields of the display screen (10).

4. A calculator as set forth in any of Claims 1-3 further characterized in that the keyboard includes control keys (21) for enabling the display screen (10) to provide respective place values of a number previously displayed thereon as to the number of tens, hundreds and thousands therein dependent upon which control key is actuated.

5. A calculator as set forth in Claim 4, further characterized in that one or more complex signs (24) is actuated to provide a horizontal bar on the display screen blanking out a corresponding digit of the number previously displayed on the display screen in response to the actuation of one of the place value control keys for respectively displaying the number of tens, hundreds, and thousands in the previously displayed number depending upon which of the place value control keys (21) is actuated.

6. A calculator as set forth in any preceding claim, further characterized in that said keyboard (11) includes a control key (21a) actuating said microprocessor (1) to provide via the display controller (5) on the display screen (10) the positional value of a digit in a number previously displayed on the display screen (10).

7. A calculator as set forth in any preceding claim, further characterized in that the keyboard (11) includes a mode key (17) for switching the calculator between a normal operating mode wherein the calculator functions as a calculator and a special functional mode different from the normal operating mode.

8. A calculator as set forth in any preceding claim, further characterized in that the keyboard (11) includes a key (18a) for entering and validating mathematical expressions.

9. A calculator as set forth in any preceding claim, further characterized in that the keyboard includes a key (20a) for controlling the display of a question mark representing an unknown value on the display screen, said question mark being displayed in one of the digit fields of said display screen in response to actuation of said question mark - display controlling key.

10. A calculator as set forth in any preceding claim, further characterized in that the keyboard includes a key (20b) for controlling the display of an asterisk representing an unknown operation on the display screen segments of one of said complex signs being selectively actuate in response to the actuation of said asterisk display-controlling key to form the asterisk on said display screen.

**Patentansprüche**

1. Rechner mit einem Mikroprozessor (1), der die durch den Rechner durchgeführten Operationen steuert, mehreren Schieberegistern (2), die mit den Mikroprozessor verbunden sind und der temporären Speicherung der Zahlen dienen, an denen die Operationen durchzuführen sind, einem Festwertspeicher (7), der die Programme für die Funktionen des Rechners enthält, einer Anzeigesteuereinheit (5), die mit dem Mikroprozessor (1) und dem Festwertspeicher (7) verbunden ist, einer Tastatur (11) zur Steuerung der Operationen und der Eingabe von Daten in den Rechner und einem Anzeigefeld (10) mit mehreren Ziffernfeldern und einem komplexen Zeichen (24), das aus die Anzeige aktivierenden Segmenten gebildet ist, die in wenigstens einem Zwischenraum zwischen zwei aufeinanderfolgenden Ziffernfeldern des Anzeigefeldes angeordnet sind, wobei das komplexe Zeichen unter der Steuerung der Anzeigesteuereinheit (5) und des Mikroprozessors (1) ein symbolisches Zeichen (+, -, x, ÷, ⊢, =, <, >, *) der entsprechenden Operation liefert; dadurch gekennzeichnet, daß das Anzeigefeld bis zu acht Ziffernfelder enthält und ein komplexes Zeichen (24), das in jedem der Zwischenräume, die die Ziffernfelder trennen, angeordnet ist, für wenigstens drei Ziffernfelder, von links beginnend, umfaßt, und dadurch, daß das Anzeigefeld einen Punkt enthält, der jedem der mehreren Ziffernfelder zugeordnet ist, jeder Punkt (26) unter dem ihm entsprechenden Ziffernfeld in Ausrichtung zum linken äußersten Segment der in dem Ziffernfeld vorgesehenen Ziffer angeordnet ist und dieser Punkt mit den entsprechenden Segmenten der Ziffer, die in dem entsprechenden Ziffernfeld enthalten sind, zusammenwirkt, um ein Fragezeichen zu bilden, das unter der Steuerung des Mikroprozessors und der Anzeigesteuereinheit (5) die Anzeige einer Unbekannten auf dem Anzeigefeld darstellt.

2. Rechner nach Anspruch 1, darüber hinaus dadurch gekennzeichnet, daß das Anzeigefeld (10) eine Zone (27) umfaßt, die links vom linken äußersten Ziffernfeld angeordnet ist, um ein Fragezeichen als Reaktion darauf anzuzeigen, daß der Rechner in einen speziellen Funktionsmodus geschaltet wird, der sich von dem Rechner-Funktionsmodus unterscheidet.

3. Rechner nach einem der Ansprüche 1 und 2, darüber hinaus dadurch gekennzeichnet, daß das Anzeigefeld (10) Segmente enthält, die ein Zeichen (25) liefern, das einen schrägen Strich in den jeweiligen Zwischenräumen zwischen den drei rechts liegenden Ziffernfeldern des Anzeigefeldes (10) darstellt.

4. Rechner nach einem der Ansprüche 1 bis 3 darüber hinaus dadurch gekennzeichnet, daß die Tastatur Bedienungstasten (21) zur Aktivierung des Anzeigefeldes (10) umfaßt, um, je nachdem, welche Bedienungstaste betätigt wurde, entsprechende Stellenwerte einer vorher auf dem Anzeigefeld angezeigten Zahl in bezug auf die in dieser Zahl enthaltene Anzahl an Zehnern, Hundertern oder Tausendern zu liefern.

5. Rechner nach Anspruch 4, darüber hinaus dadurch gekennzeichnet, daß als Reaktion auf die Betätigung einer der Stellenwert-Bedienungstasten zum entsprechenden Anzeigen der Anzahl an Zehnern, Hunderten und Tausendern in der vorher angezeigten Zahl, je nachdem, welche Stellenwert-Bedienungstaste (21) betätigt wurde, ein oder mehrere komplexe Zeichen (24) aktiviert werden, um einen Querstrich auf dem Anzeigefeld anzuzeigen, der eine entsprechende Ziffer der vorher auf dem Anzeigefeld angezeigten Zahl ersetzt.

6. Rechner nach einem der vorhergehenden Ansprüche, darüber hinaus dadurch gekennzeichnet, daß die Tastatur (11) eine Bedienungstaste (21a) enthält, die den Mikroprozessor (1) anspricht, so daß er über die Anzeigesteuereinheit (5) auf dem Anzeigefeld (10) den Positionswert einer Ziffer in einer vorher auf dem Anzeigefeld (10) angezeigten Zahl liefert.

7. Rechner nach einem der vorhergehenden Ansprüche, darüber hinaus dadurch gekennzeichnet, daß die Tastatur (11) eine Modus-Taste (17) enthält, um den Rechner zwischen einem normalen Betriebsmodus, in dem der Rechner wie ein Rechner funktioniert, und einem speziellen Funktionsmodus, der sich von dem normalen Betriebsmodus unterscheidet, hin- und herzuschalten.

8. Rechner nach einem der vorhergehenden Ansprüche, darüber hinaus dadurch gekennzeichnet, daß die Tastatur (11) eine Taste (18a) zur Eingabe und Überprüfung mathematischer Ausdrücke enthält.

9. Rechner nach einem der vorhergehenden Ansprüche, darüber hinaus dadurch gekennzeichnet, daß die Tastatur eine Taste (20a) zur Steuerung der Anzeige eines Fragezeichens enthält, das einen unbekannten Wert auf dem Anzeigefeld darstellt, wobei das Fragezeichen als Reaktion auf die Betätigung der Fragezeichenanzeige-Steuertaste in einem der Ziffernfelder des Anzeigefeldes angezeigt wird.

10. Rechner nach einem der vorhergehenden Ansprüche, darüber hinaus dadurch gekennzeichnet, daß die Tastatur eine Taste (20b) zur Steuerung der Anzeige eines Sternchens enthält, das eine unbekannte Operation auf dem Anzeigefeld darstellt, wobei als Reaktion auf die Betätigung der Sternchenanzeige-Steuertaste zur Bildung eines Sternchens auf dem Anzeigefeld Segmente eines der komplexen Zeichen selektiv aktiviert werden.

## Revendications

1. Calculateur comportant :

un microprocesseur (1) contrôlant les opérations,, exécutées par le calculateur, une pluralité de registres à décalage (2) associés au microprocesseur et prévus pour réaliser la mémorisation temporaire des nombres, sur lesquels les opérations doivent être exécutées, une mémoire morte (7) contenant les programmes concernant les fonctions du calculateur, un dispositif de commande d'affichage (5) associé au microprocesseur (1) et à la mémoire morte (7), un clavier (11) servant à commander les opérations et à introduire des données dans le calculateur, un écran d'affichage (10) comportant une pluralité de zones de chiffres, et un signe complexe (24) formé à partir de segments permettant l'affichage et disposé dans au moins un intervalle entre deux des zones de chiffres successives dudit écran d'affichage, ledit signe complexe fournissant, sous la commande du dispositif d'affichage (5) et dudit microprocesseur (1), un signe symbolique (+, -, x, :, ⊢, =, <, >, *) de l'opération correspondante ; caractérisé en ce que l'écran d'affichage comprend une pluralité de zones de chiffres présentes en un nombre atteignant jusqu'à huit zones et comprend un signe complexe (24) disposé dans chacun des intervalles séparant les zones de chiffres pour une pluralité de zones de chiffres présentes en un nombre égal au moins à trois à partir de la gauche, et en ce que l'écran d'affichage comprend un point associé à chacune de la pluralité de zones de chiffres, chaque point respectif (26) étant disposé au-dessous de la zone de chiffre qui lui correspond, en étant aligné avec les segments les plus à gauche du chiffre prévu dans la zone de chiffre, ledit point coopérant avec les segments appropriés du chiffre contenu dans la zone de chiffre correspondante pour former un signe d'interrogation illustrant l'affichage d'une inconnue sur l'écran d'affichage, sous la commande du microprocesseur (1) et du dispositif de commande d'affichage (5).

2. Calculateur selon la revendication 1, caractérisé en outre en ce que l'écran d'affichage (10) comprend une zone (27) disposée à gauche de la zone de chiffre la plus à gauche pour l'affichage d'un signe d'interrogation en réponse au fait que le calculateur est commuté sur un mode fonctionnel spécial différent du mode, fonctionnel de calcul.

3. Calculateur selon l'une quelconque des revendications 1 et 2, caractérisé en outre en ce que l'écran d'affichage (10) comprend des segments fournissant un signe (25) représentant un trait oblique dans les intervalles respectifs entre les trois zones de chiffres situées à droite sur l'écran d'affichage (10).

4. Calculateur selon l'une quelconque des revendications 1-3, caractérisé en outre en ce que le clavier comprend des touches de commande (21) pour autoriser l'écran d'affichage (10) à fournir des valeurs de positions respectives d'un nombre préalablement affiché sur l'écran, en ce qui concerne le nombre des dizaines, des centaines et des milliers en fonction de la touche de commande qui est actionnée.

5. Calculateur selon la revendication 4, caractérisé en outre en ce qu'un ou plusieurs signes complexes (24) sont activés pour former une barre horizontale sur l'écran d'affichage, en annulant un chiffre correspondant du nombre préalablement affiché sur l'écran d'affichage, en réponse à l'actionnement de l'une des touches de commande des valeurs de positions pour l'affichage respectif du nombre des dizaines, des centaines et des milliers dans le nombre affiché précédemment, en fonction de celle des touches (21) de commande de valeurs de positions qui est actionné.

6. Calculateur selon l'une quelconque des revendications précédentes, caractérisé en outre en ce que ledit clavier (11) comprend une touche de commande (21a) actionnant ledit microprocesseur (1) pour délivrer, par l'intermédiaire du dispositif de commande d'affichage (5), sur l'écran d'affichage (10) la valeur de position d'un chiffre dans un nombre précédemment affiché sur l'écran d'affichage (10).

7. Calculateur selon l'une quelconque des revendications précédentes, caractérisé en outre en ce que le clavier (11) comprend une touche de mode (17) pour commuter le calculateur entre un mode de fonctionnement normal, dans lequel le calculateur fonctionne en tant que calculateur, et un mode de fonctionnement spécial différent du mode de fonctionnement normal.

8. Calculateur selon l'une quelconque des revendications précédentes, caractérisé en ce que le clavier (11) comprend une touche (18a) permettant d'introduire et de valider des expressions mathématiques.

9. Calculateur selon l'une quelconque des revendications précédentes, caractérisé en outre en ce que le clavier comprend une touche (20a) pour commander l'affichage d'un signe d'interrogation représentant une valeur inconnue sur l'écran d'affichage, ledit signe d'interrogation étant affiché dans l'une des zones de chiffres dudit écran d'affichage en réponse à l'actionnement de ladite touche de commande du signe d'interrogation - de l'affichage.

10. Calculateur selon l'une quelconque des revendications précédentes, caractérisé en outre en ce que le clavier comprend une touche (20b) pour commander l'affichage d'un astérisque représentant une opération inconnue sur l'écran d'affichage, des segments desdits signes complexes étant actionnés sélectivement en réponse à l'actionnement de ladite touche de commande d'affichage de l'astérisque pour former l'astérisque sur ledit écran d'affichage.

FIG.1

# FIG. 2

EP 0 434 881 B1

FIG.4

FIG.3

# FIG.6

$$2 + ? = 5$$

# FIG.5

$$2.14 + 1.26 = 3.40$$
$$= 3.4$$

$$4 \underset{OP?}{\uparrow} 2 = 2$$

4      ? 4     10

[ ※ ]      ? 4※ 24     10

2      ? 4※2     10

[ = ]      ? 4※2 = 24

2      ? 4※2 = 2

[ ENTER ]      ?    2   SOL   10

? 4※2 = 2

[ − ]      ? 24     10

[ TEST ]      ?    YES

28g      ? 4−2 = 2    10

28h      ? 4※2 = 2

## FIG.7

16

$$1 < \ ? \ < \ 5/3$$

1   27

[⟨,⟩]   27

[ ? ]

[⟨⟩]

5 [ / ] 3

[ENTER]

28i

3 [ / ] 4

[TEST]

28j

28k

6 [ / ] 4

[TEST]

28l

28m

**FIG.8**

# FIG.9

# FIG.10